# EUROPEAN PATENT SPECIFICATION

(11) **EP 3 166 456 B1**
(45) Date of publication and mention of the grant of the patent: **26.09.2018**
(21) Application number: 15734187.6
(22) Date of filing: 07.07.2015
(51) Int. Cl.: A47J 31/44, A47J 31/56

(54) **ACCESSORY FOR SUPPLYING AUTOMATICALLY A BEVERAGE MACHINE WITH LIQUID FROM A DISTRIBUTION NETWORK**
ZUBEHÖR ZUM AUTOMATISCHEN VERSORGEN EINER GETRÄNKEMASCHINE MIT FLÜSSIGKEIT AUS EINEM VERTEILUNGSNETZ
ACCESSOIRE POUR ALIMENTER AUTOMATIQUEMENT UNE MACHINE DE BOISSON AVEC UN LIQUIDE PROVENANT D'UN RÉSEAU DE DISTRIBUTION

(30) Priority: 09.07.2014 EP 14176237
(43) Date of publication of application: 17.05.2017
(73) Proprietor: Nestec S.A., 1800 Vevey (CH)
(72) Inventor: LAGOUCHE, Laurent, 74500 Evian les Bains (FR); GUYON, Bertrand, 25160 Saint Point Lac (FR); LARZUL, David, 69330 Meyzieu (FR)
(74) Representative: Schnyder, Frank Simon
(86) International application number: PCT/EP2015/065410
(87) International publication number: WO 2016/005349

(56) References cited:
- EP-A1- 0 244 010
- EP-A1- 1 462 040
- US-A1- 2011 212 236

## Description

### Field of the Invention

The present invention concerns the supply of liquid from a liquid distribution network, such as from a city water distribution network (typically the network supplying water to the tap valve in households), to a beverage preparation machine having a liquid storage tank.

For the purpose of the present description, a "beverage" is meant to include any liquid food, such as tea, coffee, hot or cold chocolate, milk, soup, baby food, etc... A "cartridge" is meant to include any pre-portioned beverage ingredient, such as a flavouring ingredient, within an enclosing packaging of any material, in particular an airtight packaging, e.g. plastic, aluminium, recyclable and/or biodegradable packagings, and of any shape and structure, including soft pods or rigid capsules containing the ingredient. The cartridge may contain an amount of ingredient for preparing a single beverage serving or a plurality of beverage servings.

### Background Art

Beverage preparation machines have been known for a number of years. For example, US 5,943,472 discloses a water circulation system between a water reservoir and a hot water or vapour distribution chamber of an espresso machine. The circulation system includes a valve, metallic heating tube and pump that are connected together and to the reservoir.

A beverage preparation machine typically includes a housing containing a beverage processing module and a water tank in fluid communication with the beverage processing module. Examples of such beverage preparation machines are disclosed in EP 1 208 782, EP 1 267 687, EP 1 686 879, EP 1 731 065, EP 1 829 469, EP 1 864 598, EP 1 865 815, EP 1 867 260, EP 1 878 368, EP 2 222 210, EP 2 222 211, EP 2 222 212, EP 2 227 121, EP 2 227 122, US 2008/0006159, US 7,165,488, WO 2007/111884, WO 2009/074553, WO 2010/015427 and WO 2012/055767.

Usually the water tank is removable to be refilled by a user when empty. Some systems include a continuous water supply by connecting the beverage machine directly to the city water distribution network, as for instance disclosed in CN201076369. This publication discloses a system that has a refillable water tank as well as an inlet for direct connection with the tap. Hence, beverage preparation can be carried out either by using water directly from the tap or from the water tank.

### Summary of the Invention

The invention thus relates to a connecting device for connecting a beverage preparation machine with an external liquid delivery system, e.g. a water distribution network, to supply such liquid to the machine. Typically, liquid is supplied to the connecting device at a pressure above the atmospheric pressure, e.g. in the range of 1.1 to 20 bar, typically 1.2 to 15 bar, such as 1.5 to 10 bar, for instance 2 to 6 bar.

The machine has a liquid storage tank with an upper opening, such as an opening delimited by a rim of the tank. The tank can be delimited by a bottom part and a peripheral wall extending from and above the bottom part towards the opening. For instance, the tank has an outlet for dispensing liquid to a beverage processing and deliver unit of the machine. Such an outlet can be located at the bottom part of the tank.

Examples of beverage preparation machines with suitable storage tanks are disclosed in EP 2 228 633, WO 2009/074550, WO 2010/046442, WO 2010/128109, WO 2011/083103, WO 2011/089210, WO 2011/144723, WO 2012/055767, WO 2013/104643, and US 2011/0212236.

The connecting device has: an inlet for a fluid connection to the external system; an outlet for delivering liquid from the external system via the inlet to the beverage machine; a valve arrangement switchable between an open configuration for establishing a fluidic connection between the inlet and the outlet and a closed configuration for interrupting the fluidic connection; and a control unit for switching the valve arrangement between its open configuration and its closed configuration. The valve arrangement may be connected to the inlet via a fluid connector, e.g. a fluid connector fixed to a frame portion of a body of the device.

For instance, the control unit is connected to at least one of: a power source via a power connector, such as an electric connector (e.g. plug or socket) to the mains with a voltage transformer and/or an electric connector (e.g. plug or socket) to the beverage machine with or without a voltage transformer; and a user interface such as an interface comprising a power and/or reset switch (such as an on/off switch and/or a switch for resetting the device, e.g. after an incident) and/or a control indicator e.g. a control light. The control indicator can for instance indicate: whether the device is on or off, and/or whether the valve arrangement are in the open or the closed configuration; and/or whether the device is properly functioning or malfunctioning; and/or whether the device is in a programming mode.

The connecting device further comprises: a sensor arrangement connected to the control unit that is configured to switch the valve arrangement in response to a triggering signal from the sensor arrangement; and an assembly arrangement for reversibly fixing the connecting device, as a user-removable accessory, to the tank so that the outlet is positioned for delivering liquid via the upper opening into the tank.

In an embodiment that is not part of the present invention, the connecting device may be connected to and use sensors that are integrated in the beverage machine to monitor the tank.

In another embodiment that is not part of the present invention, the control unit of the connecting device is integrated in the control unit of the beverage machine, the electric powering of the connecting device being optionally supplied by the beverage machine.

The assembly arrangement may include any connector that reversibly fixes directly or indirectly the connecting device to the machine, e.g. a machine's tank and/or machine's main body, such as a mechanical or physical connector, e.g. one or more of hooks, clips, snaps, clamps, screws, friction fasteners, geometric fasteners and magnetic connectors.

In an embodiment that is not part of the present invention, the connecting device may be integrated in the beverage machine in a manner not intended to be disassemblable by a user.

Hence, the connecting device may be fitted onto new or existing beverage machines (retrofitting) and does not alter the integrity of the machine. Hence, the connecting device can be removed from the machine so that beverage machine can be operated by manually refilling its tank.

The connecting device being provided as a user-removable accessory, the connecting device can be fitted onto machines that can be operated without the connecting device or with the connecting device. The connecting device is provided as a separable unit that can be fitted by a user to a beverage machine having a liquid tank.

Typically, the assembly arrangement is configured for fixing such device to the tank so that the sensor arrangement extends inside the tank via said upper opening or is located adjacent a peripheral tank wall externally to the tank. Whether extending inside or located externally to the tank, the sensor arrangement is arranged so as to generate a triggering signal when the liquid reaches a predetermined level in the tank.

The sensor arrangement may comprise a low level sensor for detecting a low level of liquid in the tank to generate a triggering signal for switching the valve arrangement to the open configuration so as to fill the tank with liquid delivered by the outlet. The control unit can be arranged to switch the valve arrangement into the closed configuration when a predetermined period of time has lapsed after switching the valve arrangement into the open configuration, the predetermined period of time being optionally user-adjustable, e.g. to adjust to the flowrate of the liquid supplied from the external delivery system and/or to adjust to a maximum storage volume of the tank. The control unit may be arranged to switch the valve arrangement into the closed configuration when a further level sensor detecting an overfill level above the high level generates a triggering signal for switching the valve arrangement or when a predetermined volume of liquid measured by a flowmeter connected to the control unit has been delivered via the outlet, the predetermined volume being optionally user-adjustable, e.g. to adjust to a maximum storage volume of said tank.

The sensor arrangement may include a high level sensor for detecting a high level of liquid in the tank to generate a triggering signal for switching the valve arrangement to the closed configuration.

Optionally, the control unit is configured so as to intermittently read the high level sensor, for instance intermittently read the high level sensor at long time intervals, e.g. at time intervals in the range of 1 to 20 min., and maintain the valve arrangement in the closed configuration as long as a high level of liquid is detected and then temporarily switch the valve arrangement into the open configuration until the high level of liquid is again detected whereby the high level sensor is read continuously or at short time intervals by the control unit, such as intervals of less than 5 second e.g. intervals in the range of 0.1 to 3 seconds. The time intervals may be user-adjustable and/or set in accordance with the maximum speed for emptying the tank (the maximum rate of removal of liquid by the machine) for setting the long time intervals and/or the existence and size of available storage space above the high level and the flowrate of the liquid supplied from the external delivery system for setting the short time intervals.

Hence, the device can be operated with a high level sensor and a low level sensor to refill the tank when empty or close to being empty and in a manner to avoid overflow.

Alternatively, the device can be operated with a single high or low level sensor to detect when the tank needs to be refilled (or not refilled) and a time measuring system (e.g. as described above) and/or flow-meter arrangement to avoid excessive filling or emptying (open loop control of the filling state of the tank).

In a safer embodiment, the device operates both with low and high level sensors on the one hand and with a time measuring system and/or flow-meter system on the other hand. Hence, an isolated failure of a sensor, a flow-meter or the time measuring system does not lead to an overflow of the tank.

For instance, the sensor arrangement comprises at least one of an optical sensor, an electric sensor, e.g. a capacitive sensor, and a float sensor for sensing a float in the tank. The technical details of such sensors is well known in the field and are for instance discussed in EP 2 228 633 and US 8 387 455.

The valve arrangement may include one or more valves. For instance, the valve arrangement comprises two or more valves that are in serial fluidic configuration between the inlet and the outlet.

Two such valves that that are in serial fluidic configuration can be controlled in parallel by the control unit to be both simultaneously open for establishing the fluidic connection between the inlet and the outlet or to be both simultaneously closed for interrupting the fluidic connection.

Two such valves that that are in serial fluidic configuration may be controlled separately so that: a first valve (e.g. a main or control valve) of such valves is open or closed for establishing or interrupting the fluidic connection between the inlet and the outlet as required for supplying liquid to the machine; and a second valve (e.g. a backup or safety valve) of such valves is open as long as the first valve opens and closes as controlled by the control unit and is then closed when the first valve is malfunctioning (e.g. mechanical and/or electric failure so that it does not (fully) close anymore). For instance, at least one sensor, e.g. a flowmeter and/or an overfill level sensor, is connected to the control unit for sensing an on-going flow of liquid via the inlet and the outlet after the control unit has attempted to switch the first valve into its closed configuration and for triggering the control unit to switch the second valve into its closed configuration.

Hence, by providing a serial fluidic arrangement of a plurality of valves (e.g. two valves) that are controlled in parallel (e.g. in the same manner) or separately, the possibility of mal-functioning of one valve, e.g. because of mechanical failure or electrical failure or lime clogging of this valve, does not prevent the other valve(s) from being closed and from interrupting the fluidic connection. It follows that a malfunction of one valve (e.g. unable to fully interrupt the fluidic connection) does not lead to an overflow of the tank.

Optionally, the control unit is arranged to detect a malfunctioning of either valve to then indicate to a user such malfunctioning via an indicator and/or block the non-malfunctioning valve in its closed configuration with or without automatically switching-off such device.

The connecting device may comprise a device body and an overhanging arm arranged to extend over the opening of the storage tank and optionally into the storage tank via the opening, the overhanging arm being formed of or holding the outlet and/or the sensor arrangement. Such overhanging arm can include a connecting portion for connecting a cover member that is configured to cover the opening of the storage tank. Optionally, the outlet and/or the sensor arrangement extend(s) through the connecting portion or form(s) the connecting portion or is integral with the connecting portion and the cover member.

Generally speaking, the connecting device can include a cover member that is configured to close the opening of the storage tank (e.g. to avoid contamination of the liquid in the tank by dust or other impurities that could otherwise enter the tank via its opening), the cover member delimiting a passage, such as a through hole, through which the outlet extends or through which the outlet can deliver liquid into the storage tank. Optionally, the sensor arrangement extends into the storage tank through this passage or through a different passage delimited by the cover member or the sensor arrangement is confined outside the storage tank.

Generally speaking, the cover member may include an assembly arrangement for reversibly assembling the cover member to at least one of the storage tank, such as to a rim delimiting the tank opening, and/or to a main machine body of the beverage machine, e.g. by being hooked to the main body. The assembling of the cover member to the storage tank and/or to machine's main machine body may be implemented in the manner by which ordinary tank covers are assembled thereto, e.g. as discussed in the references cited above.

The connecting device can have a device body and an assembly arrangement for reversibly assembling the device body to the tank and/or to a main machine body of the beverage machine.

The assembly arrangement may include a lower assembly arrangement, such as a foot, for reversibly assembling the device body to a lower part of the tank and/or to a lower part of the main machine body, optionally the lower assembly arrangement comprising a platform projecting from a bottom part of the device body and/or extending under the outlet.

The assembly arrangement can have an upper assembly arrangement, such as a top, for reversibly assembling the device body to an upper part of the tank and/or to an upper part of the main machine body, optionally the upper assembly arrangement comprising an arm projecting from a top part of the device body and/or extending above the outlet.

The assembly arrangement may comprise a first assembly arrangement, such as a lower assembly arrangement e.g. a foot, and a second assembly arrangement, e.g. an upper assembly arrangement such as a top, which can be reversibly fixed to the machine, e.g. to the machine's tank and/or main machine body, by fastening the first and second arrangements to one another by a fixing arrangement.

The fixing arrangement may include any connector that reversibly fixes directly or indirectly the connecting device to the machine, e.g. a machine's tank and/or machine's main body, such as a mechanical or physical connector, e.g. one or more of hooks, clips, snaps, clamps, screws, friction fasteners, geometric fasteners and magnetic connectors.

Optionally, when fixed together, the first and second arrangements may:
- extend over two extremities of the machine, e.g. over two extremities of the machine's tank and/or main machine body, to form a clamp secured to the machine, e.g. to the tank and/or main machine body, the two extremities forming for instance a top and bottom part of the machine, e.g. of the tank and/or main machine body; and/or
- extend externally over and around the machine, e.g. externally over and around the tank and/or main machine body, and optionally passing through an opening of the tank and/or main machine body; and/or
- delimit between them an opening for the external system to be connected to the inlet.

In an embodiment, the device body is made of a first part and a second part. The first part comprises the first assembly arrangement and the second part comprises the second assembly arrangement. The first and second assembly arrangements are reversibly fixed to the machine by assembling the first and second parts together by the fixing arrangement.

For instance, at least one of the first and second parts includes an outer housing by which it is assembled to the other part, e.g. each part having an outer housing whereby the parts are assembled together via their respective outer housings. For instance, one part of the first and second parts comprises the inlet, the outlet, the valve arrangement and the control unit, optionally the inlet and/or the outlet extending through the other part of the first and second parts such as through an opening delimited by a housing of the other part e.g. an opening delimited by a housing of the first part and a housing of the second part.

Hence, the connecting device can be mounted very easily onto the machine, for instance onto the machine's tank and/or main machine body. For instance, the connecting device is mounted onto the machine as a two part arrangement and secured to the machine (e.g. tank and/or main machine body) by fastening the two parts of the connecting device together by the fixing arrangement.

The fastening of the two parts may be "accessible", i.e. easily unfastenable by a user without effort (e.g. by using a user-toggle or lock), it can be "readily accessible", i.e. unfastenable by an untrained user without damaging the connecting device (e.g. by using screws). In general, the assembly arrangement resulting from such fastening, e.g. by using a corresponding fixing arrangement, is considered to be reversibly.

In an embodiment not covered by the present invention, the fastening is "not accessible", i.e. the unfastening involves a destruction of at least one part of the connecting device or of the fixing arrangement or it requires a special tool or physical key (e.g. not widely spread) or requires a special knowledge (provided by corresponding special training, e.g. an intellectual key) of the connecting device and its structure to know how to disassemble it. In general, the assembly arrangement resulting from such fastening, e.g. by using a corresponding fixing arrangement, is considered to be irreversibly.

The connecting device typically includes a member bearing the sensor arrangement. The member may extend in a generally upright direction and/or in a generally horizontal direction arranged to generally match a wall of the machine, such as a peripheral wall of the tank, along (a) corresponding direction(s), when the connecting device is fixed to the tank. The member may extend in a generally upright direction in a manner as to generally extend along the thank wall inside or outside the tank, when the connecting device is fixed to the tank. The member can form a wall of a device body of the connecing device. The member may be formed by a PCB which interfaces at least one or two sensor (s) of the sensor arrangement to the control unit.

The invention also relates to a set formed of a beverage machine and a connecting device as generally described above.

The device is arranged to connect the machine with an external liquid delivery system, e.g. a water distribution network, to supply such liquid to the machine.

The machine has a liquid storage tank with an upper opening for supplying liquid into the tank, such as an opening delimited by a rim of the tank. Optionally, the tank is delimited by a bottom part and a peripheral wall extending from and above the bottom wall towards the opening and/or has a tank outlet for dispensing liquid to a beverage processing and delivery unit of the machine.

The machine can have an inlet for supplying an ingredient, such as an ingredient contained in a cartridge, to be processed with said liquid in the processing and delivery unit to prepare a beverage. The inlet usually has an ingredient passage with or without a loading device for transporting the ingredient at the inlet. Examples of such arrangements are disclosed in EP EP 1447034, WO 01/84993, WO 02/078499, WO 03/056987, WO 2012/072766, WO 2012/093107, WO 2012/126971, WO 2014/056821, WO 2014/056641 and WO 2014/056642.

The machine may have an outlet for delivering a beverage from the processing and delivery unit. Any outlet is contemplated. Examples of advantageous outlets are disclosed in WO 2006/050769, WO 2011/095502, WO 2012/055765, WO 2012/072758 and WO 2013/127907.

The outlet may be located above a support for placing a user-recipient, e.g. a cup or a mug, for collecting the beverage delivered by the outlet. Suitable examples of such supports are disclosed in EP 1943931, EP 1867260, EP 2189087, EP 2189088, EP 2189089, WO 2009/074557, WO 2011/154492, WO 2012/007313 and WO 2013/104636.

The machine may have an actuator, such as a handle or a motor, for actuating the beverage processing and delivery unit for receiving in and/or evacuating from the unit an ingredient, such as an ingredient contained in a cartridge. Suitable examples of such actuators and actuated beverage processing and delivery units are disclosed in US 8272319, WO 2004/071259, WO 2005/004683, WO2007/135136, WO 2009/043630, WO 2010/015427, WO 2012/025258, WO 2012/025259, WO 2013/127476, WO 2014/056810, WO 2014/056862, WO 2014/060370, WO 2014/096122 and WO 2014/096123.

The machine can have a pump for pumping the liquid from the tank to a beverage delivery outlet. Examples of suitable pumps and/or their integration in the fluid line of beverage preparation machines are disclosed in WO 2009/024500, WO 2009/150030, WO 2010/006953, WO 2011/107574, WO 2010/108700 and WO 2013/098173.

The machine may include a mixing chamber for mixing the liquid driven by the pump with an ingredient such as an ingredient contained in a cartridge. Examples of mixing chambers can be found in the references listed in relation with the actuated beverage processing and delivery unit.

The machine may include thermal conditioner, such as a heater and/or a cooler, for thermally conditioning the liquid supplied from the tank, e.g. via a tank outlet. Examples of thermal conditioners and and/or their integration in the fluid line of beverage preparation machines are disclosed in US 8646377, WO 01/54551, WO 2004/006742, WO 2006/029763, WO 2009/092746, WO 2009/043851, WO 2009/043865 and WO 2011/157675.

The machine may include a machine control unit such as a control unit with a user-interface. Implementation examples of control units and user-interfaces in beverage preparation machines are for example disclosed in WO 2008/138710, WO 2009/043865, WO 2009/135821, WO 2010/003932, WO 2010/037806, WO 2010/046442, WO 2011/020779, WO 2011/026853, WO 2011/029813, WO 2011/144719, WO 2011/144720, WO 2012/007260, WO 2012/032019 and WO 2012/072764.

The machine can comprise an electric connector for supplying power via a power connector to the connecting device, e.g. as disclosed in WO 2009/074555.

The machine may have a removable tank lid for covering the tank. The tank lid may be compatible with the connecting device when the connecting device is used with the machine or the tank lid may be removed from the tank for using the connecting device. When the tank lid is removed, the connecting device may comprise a cover member that replaces the tank lid and that allows the refilling of the tank via the connecting device (usually through the cover member). The tank lid (or the device's cover member) may be secured to the machine's main body or to the tank or to both. An example of a tank lid (that can be modified for the connecting device, either as a part of the connecting device (as its cover member) or as part of the beverage machine or that can be used as such when the beverage machine is not combined with the connecting device) is taught in WO 2011/089210.

The beverage preparation machine can be an in-home or out of home machine. The machine may be for the preparation of coffee, tea, chocolate, cacao, milk, soup, baby food, etc.... The machine may be arranged for preparing within a beverage processing module a beverage by passing hot or cold water or another liquid through a cartridge containing an ingredient, such as a flavouring ingredient, of the beverage to be prepared, such as ground coffee or tea or chocolate or cacao or milk powder.

The beverage preparation typically includes the mixing of a plurality of beverage ingredients, e.g. water and milk powder, and/or the infusion of a beverage ingredient, such as an infusion of ground coffee or tea with water. One or more of such ingredients may be supplied in loose and/or agglomerate powder form and/or in liquid form, in particular in a concentrate form. A carrier or diluents liquid, e.g. water, may be mixed with such ingredient to form the beverage. The liquid may be supplied manually and/or via the external delivery system.

For instance, a predetermined amount of beverage is formed and dispensed on user-request, which corresponds to a serving. The volume of such a serving may be in the range of 25 to 200 ml and even up to 300 or 400 ml, e.g. the volume for filling a cup, depending on the type of beverage. Formed and dispensed beverages may be selected from ristrettos, espressos, lungos, cappuccinos, latte macchiato, cafe latte, americano coffees, teas, etc... For example, a coffee machine may be configured for dispensing espressos, e.g. an adjustable volume of 20 to 60 ml per serving, and/or for dispensing lungos, e.g. a volume in the range of 70 to 150 ml per serving.

### Brief Description of the Drawings

The invention will now be described with reference to the schematic drawings, wherein:
- Figure 1 illustrates a beverage preparation machine having a tank which can be fitted with a exemplary connecting device in accordance with the invention;
- Figures 2 and 3 show a perspective view and a side view, respectively, of such a connecting device;
- Figure 4 illustrates a beverage preparation machine fitted with such a connecting device; and
- Figure 5 is a cross-sectional view of part of a beverage machine fitted with such a connecting device.

### Detailed description

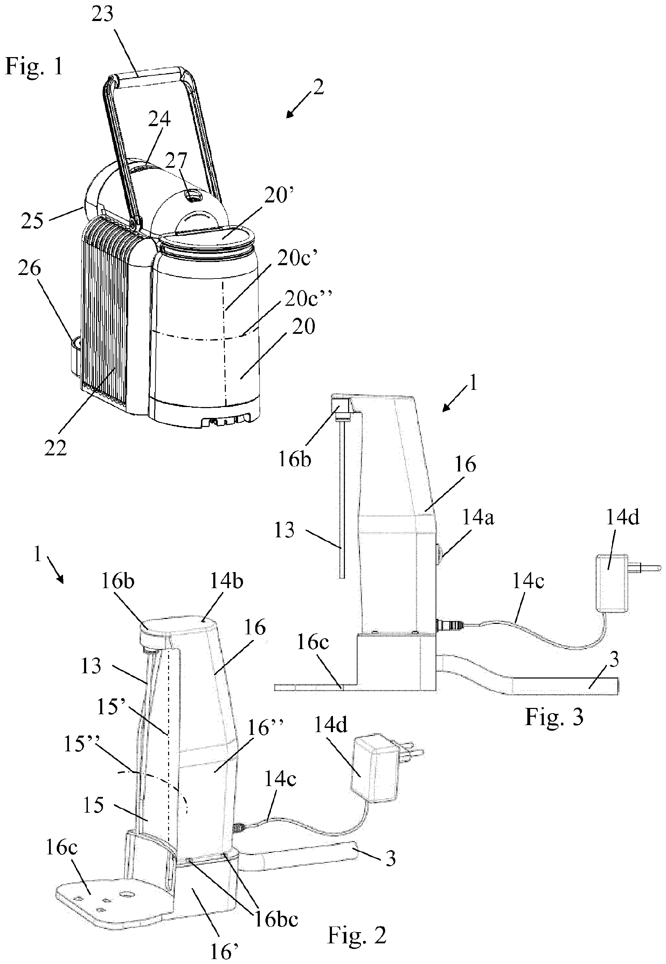

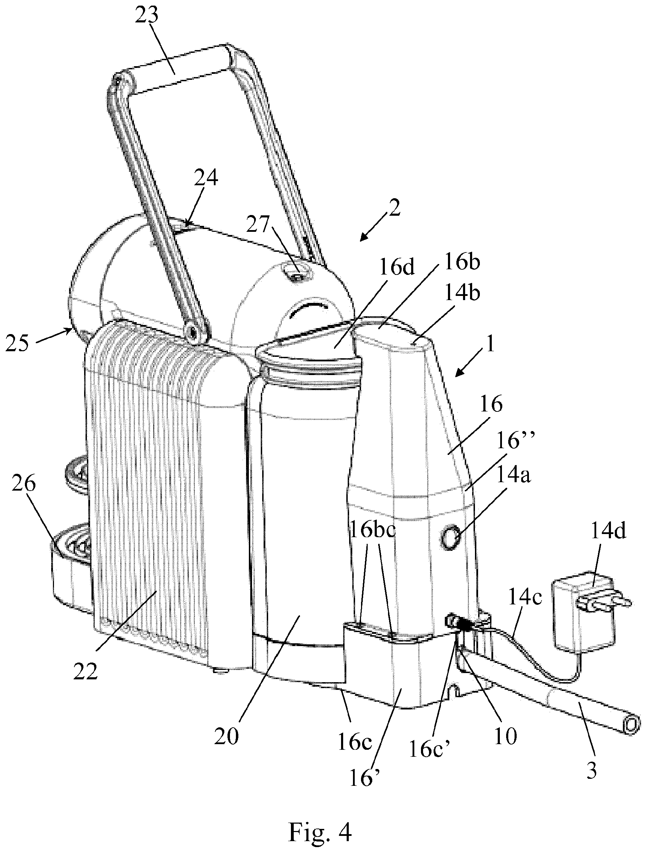

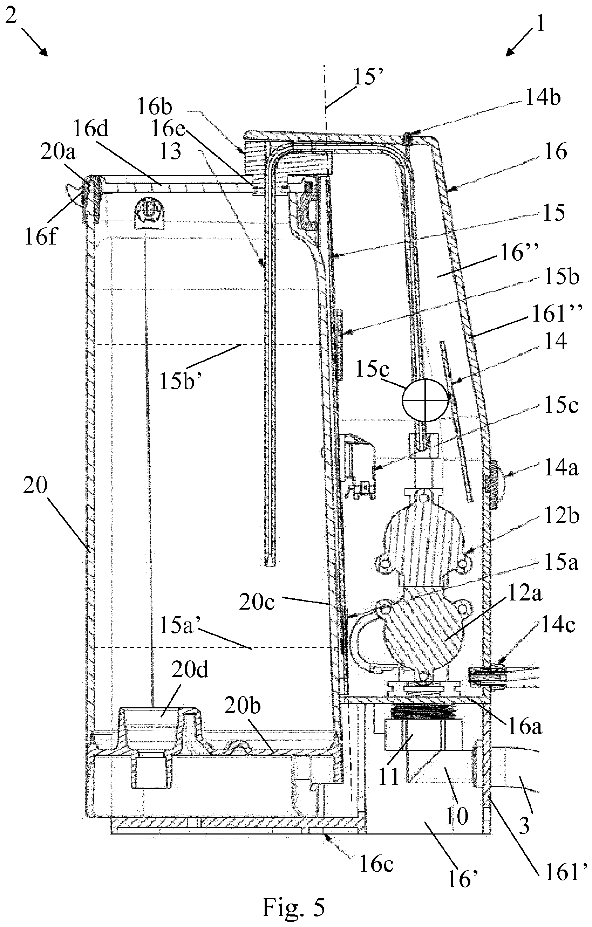

Figures 1 to 3 illustrates a beverage preparation machine 2 that can be retrofitted with a connecting device 1 shown in Figs 2 to 4 in a manner illustrated in Fig. 5.

Exemplary machine 2 shown in Figs 1, 4 and 5 has a liquid storage tank 20, e.g. a water storage tank, with an upper opening 20a for supplying liquid into tank 20, such as an opening 20a delimited by a rim of tank 20. For instance, tank 20 is delimited by a bottom part 20b and a peripheral wall 20c extending from and above bottom wall 20b towards opening 20a and/or having a tank outlet 20d for dispensing liquid to a beverage processing and delivery unit 24,25 of machine 2.

Machine 2 may have an inlet 24 for supplying an ingredient, such as an ingredient contained in a cartridge, to be processed with the liquid from tank 20 in processing and delivery unit 24,25 so as to prepare a beverage.

Machine 2 typically includes an outlet 25 for delivering a beverage from processing and delivery unit 24,25, such as an outlet 25 located above a support 26 for placing a user-recipient, e.g. a cup or a mug, for collecting the beverage delivered by outlet 25.

For instance, machine 2 has an actuator, such as a handle 23 or a motor, for actuating beverage processing and delivery unit 24,25 to receive in and/or evacuate from unit 24,25 an ingredient, such as an ingredient contained in a cartridge.

Typically, machine 2 comprises a pump for pumping the liquid from tank outlet 20d to a beverage delivery outlet 25, optionally via a mixing chamber for mixing the liquid with an ingredient such as an ingredient contained in a cartridge.

Machine 2 may also include a thermal conditioner, such as a heater and/or a cooler, for thermally conditioning the liquid supplied from tank 20, e.g. via tank outlet 20d.

Normally, machine 2 comprises a machine control unit such as a control unit with a user-interface 27, e.g. an on/off switch.

Optionally, machine 2 may also include an electric connector (not shown) for supplying power to an external device, such as to connecting device 1, via a power connector 14c,14d of device 1.

Furthermore, tank 20 may have a (solid) tank lid 20' covering opening 20a, lid 20' being removable for filling tank 20. When connecting device 1 is fixed to tank 20, lid 20' may be removed so that opening 20a remains open or is covered by a cover member 16d that is fixed to connecting device 1 and (re-)movable en bloc with device 1. Hence, tank 20 may nevertheless remain covered when (retro-)fitted with connecting device 1.

An exemplary connecting device 1 is illustrated in Figs 2 to 5, Figs 4 and 5 showing device 1 when mounted on a beverage preparation machine 2, typically of the type discussed above.

Connecting device 1 is arranged for connecting machine 2 with an external liquid delivery system 3, e.g. a pipe 3 of a water distribution network or a pipe 3 connected to such a network, to supply liquid from system 3 to machine 2.

Connecting device 1 typically has: an inlet 10 for a fluid connection to external liquid delivery system 3; an outlet 13 for delivering liquid from external system 3 via inlet 10 to beverage machine 2; a valve arrangement 12a,12b switchable between an open configuration for establishing a fluidic connection between inlet 10 and outlet 13 and a closed configuration for interrupting the fluidic connection, such as a valve arrangement 12a,12b connected to the inlet 10 via a fluid connector 11 e.g. a fluid connector 11 fixed to a frame portion 16a of a body 16 of such device 1; and a control unit 14 for switching valve arrangement 12a,12b between its open configuration and its closed configuration.

Optionally, control unit 14 is connected to at least one of: a power source via a power connector 14c,14d; and a user interface 14a,14b such as an interface comprising a and/or reset switch 14a (e.g. an on/off switch and/or a switch for resetting device 1) 14a and/or a control indicator e.g. a control light 14b. The power source may be provided by beverage preparation machine 2 itself or may be external to device 1 and to machine 2, for instance the mains. Power connector 14c,14d may include an electric cable 14c and a plug 14d. Power connector 14c,14d may include a voltage transformer, e.g. within plug 14d or on control unit 14.

Connecting device 1 may comprise a sensor arrangement 15a,15b connected to control unit 14 that is configured to switch valve arrangement 12a,12b in response to a triggering signal from sensor arrangement 15a,15b.

Connecting device 1 can have an assembly arrangement 16c,16d for reversibly fixing connecting device 1, as a user-removable accessory 1, to tank 20 so that outlet 13 is positioned for delivering liquid via upper opening 20a into tank 20.

Alternatively, the connecting device can be integrated in the beverage machine in a manner not intended to be disassemblable by a user.

The connecting device may be connected to and use sensors that are integrated in the beverage machine to monitor the tank.

Typically, assembly arrangement 16c,16d is configured for fixing device 1 to tank 20 so that sensor arrangement 15a,15b extends inside tank 20 via upper opening 20a or is located adjacent a peripheral tank wall 20c externally to tank 20, so as to generate a triggering signal when the liquid reaches a predetermined level 15a',15b' in tank 20.

Sensor arrangement 15a,15b typically comprises a low level sensor 15a for detecting a low level 15a' of liquid in tank 20 to generate a triggering signal for switching valve arrangement 12a,12b to the open configuration so as to fill tank 20 with liquid delivered by outlet 13.

Control unit 14 can be arranged to switch valve arrangement 12a,12b into the closed configuration when a predetermined period of time has lapsed after switching the valve arrangement 12a,12b into the open configuration, the predetermined period of time being optionally user-adjustable or user-programmable.

Control unit 14 can be arranged to switch valve arrangement 12a,12b into the closed configuration when a further level sensor detecting an overfill level above high level 15b' generates a triggering signal for switching the valve arrangement or when a predetermined volume of liquid measured by a flowmeter 15c connected to control unit 14 has been delivered via outlet 13, the predetermined volume being optionally user-adjustable, e.g. to adjust to a maximum storage volume of tank 20.

Sensor arrangement 15a,15b can comprise a high level sensor 15b for detecting a high level 15b' of liquid in tank 20 to generate a triggering signal for switching valve arrangement 12a,12b to the closed configuration.

Control unit 14 may be configured so as to intermittently read the high level sensor 15b, for instance intermittently read high level sensor 15b at long time intervals, e.g. e.g. at time intervals in the range of 1 to 30 minutes, and maintain the valve arrangement 12a,12b in the closed configuration as long as the high level 15b' of liquid is detected and then temporarily switch valve arrangement 12a,12b into the open configuration until the high level 15b' of liquid is again detected whereby high level sensor 15b is read continuously or at short intervals in time by control unit 14, e.g. intervals of less than 5 second such as intervals in the range of 0.1 to 3 seconds.

The time intervals may be user-adjustable and/or set in accordance with the maximum speed for emptying the tank 20 (the maximum rate of removal of liquid by machine 2) for setting the long time intervals and/or the existence and size of available storage space above the high level and the flowrate of the liquid supplied from the external delivery system for setting the short time intervals.

Sensor arrangement 15a,15b may comprise at least one of an optical sensor, an electric sensor, e.g. a capacitive sensor, and a float sensor for sensing a float in tank 20.

Valve arrangement 12a,12b may comprise at least one valve 12a,12b.

In a particular embodiment, valve arrangement 12a,12b comprises two or more valves 12a,12b that are in a serial fluidic configuration between inlet 10 and outlet 13.

At least two such valves 12a,12b that are in serial fluidic configuration can be controlled in parallel by control unit 14 to be both simultaneously open for establishing the fluidic connection between inlet 10 and outlet 13 or both simultaneously closed for interrupting the fluidic connection.

At least two such valves 12a,12b that are in serial fluidic configuration can be controlled separately by control unit 14. A first valve 12a (e.g. a main valve or a control valve) of such valves 12a,12b can be opened or closed for establishing or interrupting the fluidic connection between inlet 10 and outlet 13 as required for supplying liquid to machine. A second valve 12b (e.g. a back-up or safety valve) of such valves 12a,12b is typically open as long as first valve 12a opens and closes as controlled by control unit 14 and is closed when first valve 12a is malfunctioning. At least one sensor 15c, e.g. a flowmeter and/or an overfill level sensor, can be connected to control unit 14 for sensing an on-going flow of liquid via inlet 10 and outlet 13 after control unit 14 has attempted to switch first valve 12a into its closed configuration and for triggering control unit 14 to switch second valve 12b into its closed configuration.

Control unit 14 may be arranged to detect a malfunctioning of at least one valve 12a,12b to then indicate to a user such malfunctioning via an indicator 14b and/or block the non-malfunctioning valve in its closed configuration with or without automatically switching-off device 1.

Connecting device 1 typically comprises a body 16 and an overhanging arm 16b arranged to extend over opening 20a of storage tank 20 and optionally into the storage tank 20 via tank opening 20a, overhanging arm 16 being formed of or holding outlet 13 and/or the sensor arrangement. Overhanging arm 16b may comprise a connecting portion 16e for connecting a cover member 16d that is configured to cover opening 20a of storage tank 20. Optionally, outlet 13 and/or the sensor arrangement extend(s) through connecting portion 16e or form(s) the connecting portion or is/are integral with the connecting portion and cover member 16d.

Connecting device may have a cover member 16d that is configured to close opening 20a of storage tank 20, cover member 16d delimiting a passage 16e, such as a through hole, through which outlet 13 extends or through which the outlet can deliver liquid into storage tank 20. Optionally, sensor arrangement 15a,15b extends into storage tank 20 through this passage or through a different passage delimited by the cover member or sensor arrangement 15a,15b is confined outside the tank 20.

Cover member 16d may comprise an assembly arrangement 16f for reversibly assembling cover member 16d to at least one of storage tank 20, such as to a rim delimiting tank opening 20a, and/or to a main machine body 22 of beverage machine 2, e.g. by being hooked to main machine body 22.

The assembly arrangement can include a lower assembly arrangement 16c, such as a foot, for reversibly or irreversibly assembling the device body 16 to a lower part 20b of tank 20 and/or to a lower part of main machine body 22. For instance, lower assembly arrangement 16c has a platform projecting from a bottom part of device body 16 and/or extends under outlet 13.

The assembly arrangement may have an upper assembly arrangement 16b,16d,16e,16f, such as a top, for reversibly or irreversibly assembling device body 16 to an upper part 20a of tank 20 and/or to an upper part of main machine body 22. For example, upper assembly arrangement 16b,16d,16e,16f includes an arm 16b projecting from a top part of device body 16 and/or extending above outlet 13, such as an arm forming or fixed to a cover member 20d.

The assembly arrangement may comprise a first assembly arrangement 16c, such as a lower assembly arrangement e.g. a foot, and a second assembly arrangement 16b,16d,16e,16f, e.g. an upper assembly arrangement, which can be reversibly or irreversibly fixed to machine 2, e.g. to tank 20, by fastening first and second arrangements 16b,16c,16d,16e,16f to one another by a fixing arrangement 16bc. Fixing arrangement 16bc may include any connector that reversibly fixes directly or indirectly connecting device 1 to machine 2, e.g. a machine's tank 20 and/or machine's main body 22, such as a mechanical or physical, e.g. one or more of hooks, clips, snaps, clamps, screws, friction fasteners, geometric fasteners and magnetic connectors. For instance, when fixed together, first and second arrangements 16b,16c,16d,16e,16f:
- extend over two extremities of machine 2, e.g. over a machine tank 20, to form a clamp secured on machine 2, e.g. on tank 20, said two extremities forming for instance a top and bottom part of machine 2, e.g. of tank 20; and/or
- extend externally over and around machine 2, e.g. externally over and around tank 20, and optionally passing through an upper tank opening 20a of tank 20 into tank 20; and/or
- delimit between them an opening 16c' for external system 3 to be connected to inlet 10.

Device body 16 can be made of a first part 16' and a second part 16", first part 16' comprising first assembly arrangement 16c and second part 16" comprising second assembly arrangement 16b,16d,16e,16f, first and second assembly arrangements 16c;16b,16d,16e,16f being reversibly or irreversibly fixed to machine 2 by assembling first and second parts 16',16" together by fixing arrangement 16bc.

At least one of first and second parts 16',16" may include an outer housing 161',161" by which it is assembled to the other part. For instance each part 16',16" has an outer housing 161',161" whereby parts 16',16" are assembled together via their respective outer housings 161',161".

One part 16" of first and second parts 16',16" can comprise inlet 10, outlet 13, valve arrangement 12a,12b and control unit 14. For instance, inlet 10 and/or outlet 13 extend(s) through the other part 16' of first and second parts 16',16" such as through an opening 16c' delimited by a housing 161' of other part 16', e.g. an opening delimited by a housing 161' of first part 16' and a housing of the second part 16".

Connecting device 1 can have a member 15 bearing sensor arrangement 15a,15b. Optionally, member 15 has one or more of the following features a) to d):
a) member 15 extends in a generally upright direction 15' and/or in a generally horizontal direction 15" arranged to generally match a wall 20c of machine 2, such as peripheral wall 20c of tank 20, along (a) corresponding direction(s) 20c',20c", when device 1 is fixed to tank 20;
b) member 15 extends in a generally upright direction in a manner as to generally extend along thank wall 20c inside or outside the tank 20, when device 1 is fixed to tank 20;
c) member 15 forms a wall 15 of a body 16 of device 1;
d) member 15 is formed by a PCB which interfaces at least one or two sensor(s) 15a,15b of sensor arrangement 15a,15b to control unit 14.

## Claims

1. A connecting device (1) for connecting a beverage machine (2) with an external liquid delivery system (3), e.g. a water distribution network, to supply such liquid to said machine (2),
such machine (2) having a liquid storage tank (20) with an upper opening (20a) for supplying liquid into the tank, such as an opening (20a) delimited by a rim of the tank (20), optionally said tank (20) being delimited by a bottom part (20b) and a peripheral wall (20c) extending from and above the bottom part (20b) towards the opening (20a) and/or having a tank outlet (20d) for dispensing liquid to a beverage processing and delivery unit (24,25) of the machine (2),
said connecting device (1) having:
- an inlet (10) for a fluid connection to said external system (3);
- an outlet (13) for delivering liquid from said external system (3) via the inlet (10) to said beverage machine (2);
- a valve arrangement (12a,12b) switchable between an open configuration for establishing a fluidic connection between the inlet (10) and the outlet (13) and a closed configuration for interrupting the fluidic connection, such as a valve arrangement (12a,12b) connected to the inlet (10) via a fluid connector (11) e.g. a fluid connector (11) fixed to a frame portion (16a) of a body (16) of such device (1); and
- a control unit (14) for switching the valve arrangement (12a,12b) between its open configuration and its closed configuration,
optionally the control unit (14) being connected to at least one of: a power source via a power connector (14c,14d); and a user interface (14a,14b) such as an interface comprising a power and/or reset switch (14a) and/or a control indicator e.g. a control light (14b),
**characterised in that** such connecting device (1) further comprises:
- a sensor arrangement (15a,15b) connected to the control unit (14) that is configured to switch the valve arrangement (12a,12b) in response to a triggering signal from the sensor arrangement (15a,15b); and
- an assembly arrangement (16c,16d) for reversibly fixing said connecting device (1), as a user-removable accessory (1), to said tank (20) so that the outlet (13) is positioned for delivering liquid via said upper opening (20a) into said tank (20).

2. The device of claim 1, wherein the assembly arrangement (16c,16d) is configured for fixing such device (1) to said tank (20) so that the sensor arrangement (15a,15b) extends inside the tank (20) via said opening (20a) or is located adjacent a peripheral tank wall (20c) externally to the tank (20), so as to generate a triggering signal when the liquid reaches a predetermined level (15a',15b') in the tank (20).

3. The device of claim 1 or 2, wherein the sensor arrangement (15a,15b) comprises a low level sensor (15a) for detecting a low level (15a') of liquid in said tank (20) to generate a triggering signal for switching the valve arrangement (12a,12b) to the open configuration so as to fill said tank (20) with liquid delivered by the outlet (13).

4. The device of claim 3, wherein the control unit (14) is arranged to switch the valve arrangement (12a,12b) into the closed configuration:
- when a predetermined period of time has lapsed after switching the valve arrangement (12a,12b) into the open configuration, the predetermined period of time being optionally user-adjustable, e.g. to adjust to a flow rate of liquid supplied from said external delivery system (3) and/or to adjust to a maximum storage volume of said tank (20); and/or
- when a further level sensor detecting an overfill level above the high level (15b') generates a triggering signal for switching the valve arrangement or when a predetermined volume of liquid measured by a flowmeter (15c) connected to the control unit (14) has been delivered via the outlet (13), the predetermined volume being optionally user-adjustable, e.g. to adjust to a maximum storage volume of said tank (20).

5. The device of any preceding claim, wherein the sensor arrangement (15a,15b) comprises a high level sensor (15b) for detecting a high level (15b') of liquid in said tank (20) to generate a triggering signal for switching the valve arrangement (12a,12b) to the closed configuration, optionally the control unit (14) being configured so as to periodically read the high level sensor (15b), e.g. at time intervals in the range of 1 to 20 or 30 min., and maintain the valve arrangement (12a,12b) in the closed configuration as long as a high level (15b') of liquid is detected and then temporarily switch the valve arrangement (12a,12b) into the open configuration until the high level (15b') of liquid is again detected whereby the high level sensor (15b) is read continuously or at short intervals by the control unit (14), such as intervals of less than 5 second e.g. intervals in the range of 0.1 to 3 seconds.

6. The device of any preceding claim, wherein the sensor arrangement (15a,15b) comprises at least one of an optical sensor, an electric sensor, e.g. a capacitive sensor, and a float sensor for sensing a float in said tank (20).

7. The device of any preceding claim, wherein the valve arrangement (12a,12b) comprises at least one valve (12a, 12b).

8. The device of claim 7, wherein the valve arrangement (12a,12b) comprises two or more valves (12a,12b) that are in serial fluidic configuration between the inlet (10) and the outlet (13), optionally at least two such valves (12a,12b) that are in serial fluidic configuration are controlled:
- in parallel by the control unit (14) to be both simultaneously open for establishing the fluidic connection between the inlet (10) and the outlet (13) or both simultaneously closed for interrupting the fluidic connection, or
- separately by the control unit (14) so that a first valve (12a) of such valves (12a,12b) is open or closed for establishing or interrupting the fluidic connection between the inlet (10) and the outlet (13) as required for supplying liquid into said tank (20) and so that a second valve (12b) of such valves (12a,12b) is open as long as the first valve (12a) opens and closes as controlled by the control unit (14) and is closed when the first valve (12a) is malfunctioning, optionally a sensor (15c), e.g. a flowmeter and/or an overfill level sensor, may be connected to the control unit (14) for sensing an on-going filling of said tank (20) after the control unit (14) has attempted to switch the first valve (12a) into its closed configuration and for triggering the control unit (14) to switch the second valve (12b) into its closed configuration,
optionally the control unit (14) being arranged to detect a malfunctioning of at least one valve (12a,12b) to then indicate to a user such malfunctioning via an indicator (14b) and/or block the non-malfunctioning valve in its closed configuration with or without automatically switching-off such device (1).

9. The device of any preceding claim, which comprises a body (16) and an overhanging arm (16b) arranged to extend over the opening (20a) of said storage tank (20) and optionally into the storage tank (20) via the opening (20a), the overhanging arm (16) being formed of or holding at least one of the outlet (13) and the sensor arrangement.

10. The device of claim 9, wherein the overhanging arm (16b) comprises a connecting portion (16e) for connecting a cover member (16d) that is configured to cover the opening (20a) of said storage tank (20), optionally the outlet (13) and/or the sensor arrangement extending through the connecting portion (16e) or forming the connecting portion or being integral with the connecting portion and the cover member (16d).

11. The device of any preceding claim, which comprises a cover member (16d) that is configured to close the opening (20a) of said storage tank (20), the cover member (16d) delimiting a passage (16e), such as a through hole, through which the outlet (13) extends or through which the outlet can deliver liquid into said storage tank (20), optionally the sensor arrangement (15a,15b) extending through said passage or through a different passage delimited by the cover member into said storage tank or being confined outside the storage tank (20).

12. The device of claim 10 or 11, wherein the cover member (16d) comprises an assembly arrangement (16f) for reversibly assembling the cover member (16d) to at least one of said storage tank (20), such as to a rim delimiting the tank opening (20a), and/or to a main machine body (22) of said beverage machine (2) e.g. by being hooked to the main machine body (22).

13. The device of any preceding claim, which has a device body (16) and an assembly arrangement (16c;16b,16d,16e,16f) for reversibly assembling the device body (16) to the tank (20) and/or to a main machine body (22) of said beverage machine (2), such as:
- a lower assembly arrangement (16c), such as a foot, for reversibly assembling the device body (16) to a lower part (20b) of the tank (20) and/or to a lower part of the main machine body (22), optionally the lower assembly arrangement (16c) comprising a platform projecting from a bottom part of the device body (16) and/or extending under the outlet (13); and/or
- an upper assembly arrangement (16b,16d,16e,16f), such as a top, for reversibly assembling the device body (16) to an upper part (20a) of the tank (20) and/or to an upper part of the main machine body (22), optionally the upper assembly arrangement (16b,16d,16e,16f) comprising an arm (16b) projecting from a top part of the device body (16) and/or extending above the outlet (13), such as an arm forming or fixed to a cover member (20d); and/or
- a first assembly arrangement (16c), such as a lower assembly arrangement e.g. a foot, and a second assembly arrangement (16b,16d,16e,16f), e.g. an upper assembly arrangement, which can be reversibly fixed to said machine (2), e.g. to said tank (20) and/or main machine body (22), by fastening the first and second arrangements (16b,16c,16d,16e,16f) to one another by a fixing arrangement (16bc) that may include any connector that reversibly fixes directly or indirectly such connecting device (1) to said machine (2), e.g. a machine's tank (20) and/or machine's main body (22), such as a mechanical or physical connector, e.g. one or more of hooks, clips, snaps, clamps, screws, friction fasteners, geometric fasteners, magnetic and connectors, optionally when fixed together the first and second arrangements (16b,16c,16d,16e,16f):
- extending over two extremities of said machine (2), e.g. over said tank (20) and/or main machine body (22), to form a clamp secured on the said machine (2), e.g. on said tank (20) and/or main machine body (22), said two extremities forming for instance a top and bottom part of said machine (2), e.g. of said tank (20) and/or main machine body (22); and/or
- extending externally over and around said machine (2), e.g. externally over and around said tank (20) and/or main machine body (22), and optionally passing through an opening (20a) of said tank (20) and/or said main machine body (22); and/or
- delimiting between them an opening (16c') for said external system (3) to be connected to the inlet (10) .

14. The device of any preceding claim, which comprises a member (15) bearing the sensor arrangement (15a,15b), optionally the member (15) having one or more of the following features a) to d):
a) the member (15) extends in a generally upright direction (15') and/or in a generally horizontal direction (15") arranged to generally match a wall (20c) of the machine (2), such as a peripheral wall (20c) of the tank (20), along (a) corresponding direction(s) (20c',20c"), when such device (1) is fixed to the tank (20);
b) the member (15) extends in a generally upright direction in a manner as to generally extend along the thank wall (20c) inside or outside the tank (20), when such device (1) is fixed to the tank (20);
c) the member (15) forms a wall (15) of a body (16) of said device (1);
d) the member (15) is formed by a PCB which interfaces at least one or two sensor (s) (15a,15b) of the sensor arrangement (15a,15b) to the control unit (14).

15. A set formed of a connecting device (1) as defined in any preceding claim and a beverage machine (2), the device (1) being arranged to connect the machine (2) with an external liquid delivery system (3), e.g. a water distribution network, to supply such liquid to said machine (2), the machine (2) having a liquid storage tank (20) with an upper opening (20a) for supplying liquid into the tank, such as an opening (20a) delimited by a rim of the tank (20), optionally the tank (20) being delimited by a bottom part (20b) and a peripheral wall (20c) extending from and above the bottom wall (20b) towards the opening (20a) and/or having a tank outlet (20d) for dispensing liquid to a beverage processing and delivery unit (24,25) of the machine (2), optionally the machine having one or more of:
- an inlet (24) for supplying an ingredient, such as an ingredient contained in a cartridge, to be processed with said liquid in the processing and delivery unit (24,25) to prepare a beverage;
- an outlet (25) for delivering a beverage from the processing and delivery unit (24,25) such as an outlet (25) located above a support (26) for placing a user-recipient, e.g. a cup or a mug, for collecting the beverage delivered by the outlet (25);
- an actuator, such as a handle (23) or a motor, for actuating the beverage processing and delivery unit (24,25) for receiving in and/or evacuating from the unit (24,25) an ingredient, such as an ingredient contained in a cartridge;
- a pump for pumping said liquid from the tank outlet (20d) to a beverage delivery outlet (25), optionally via a mixing chamber for mixing said liquid with an ingredient such as an ingredient contained in a cartridge;
- a thermal conditioner, such as a heater and/or a cooler, for thermally conditioning said liquid from the tank outlet (20d);
- a machine control unit such as a control unit with a user-interface (27);
- an electric connector for supplying power via a power connector (14c,14d) to the connecting device (1); and
- a removable tank lid (20'), such as a tank lid (20') replaceable by a cover member (16) comprised by the connecting device (1).

## Patentansprüche

1. Verbindungsvorrichtung (1) zum Verbinden einer Getränkemaschine (2) mit einem externen Flüssigkeitsabgabesystem (3), zum Beispiel einem Wasserversorgungsnetz, um die Flüssigkeit der Maschine (2) zuzuführen,
wobei die Maschine (2) einen Flüssigkeitsspeichertank (20) mit einer oberen Öffnung (20a) zum Zuführen von Flüssigkeit zu dem Tank aufweist, wie etwa eine Öffnung (20a), die durch einen Rand des Tanks (20) begrenzt wird, wobei der Tank (20) wahlweise durch ein Bodenteil (20b) und eine Umfangswand (20c) begrenzt wird, die sich von dem und über das Bodenteil (20b) zur Öffnung (20a) erstreckt und/oder einen Tankauslass (20d) zum Abgeben von Flüssigkeit an eine Getränkeverarbeitungs- und -abgabeeinheit (24, 25) der Maschine (2) aufweist,
wobei die Verbindungsvorrichtung (1) aufweist:
- einen Einlass (10) für eine Fluidverbindung zu dem externen System (3);
- einen Auslass (13) zum Abgeben von Flüssigkeit aus dem externen System (3) über den Einlass (10) an die Getränkemaschine (2);
- eine Ventilanordnung (12a, 12b), die zwischen einer offenen Konfiguration zum Herstellen einer Fluidverbindung zwischen dem Einlass (10) und dem Auslass (13) und einer geschlossenen Konfiguration zum Unterbrechen der Fluidverbindung umschaltbar ist, wie etwa eine Ventilanordnung (12a, 12b), die mit dem Einlass (10) über einen Fluidverbinder (11), zum Beispiel einen Fluidverbinder (11), der mit einem Rahmenabschnitt (16a) eines Körpers (16) der Vorrichtung (1) verbunden ist; und
- eine Steuereinheit (14) zum Umschalten der Ventilanordnung (12a, 12b) zwischen ihrer offenen Konfiguration und ihrer geschlossenen Konfiguration,
wobei die Steuereinheit (14) wahlweise mit einem der folgenden verbunden ist: einer Leistungsquelle über einen Leistungsverbinder (14c, 14d); und einer Benutzerschnittstelle (14a, 14b) wie etwa einer Schnittstelle, die einen Leistungs- und/oder Rücksetzschalter (14a) und/oder eine Steueranzeige, zum Beispiel eine Steuerlampe (14b), umfasst,
**dadurch gekennzeichnet, dass** die Verbindungsvorrichtung (1) ferner umfasst:
- eine Sensoranordnung (15a, 15b), die mit der Steuereinheit (14) verbunden ist, die dazu konfiguriert ist, die Ventilanordnung (12a, 12b) in Reaktion auf ein Auslösesignal von der Sensoranordnung (15a, 15b) umzuschalten; und
- eine Montageanordnung (16c, 16d) zum reversiblen Fixieren der Verbindungsvorrichtung (1), als ein vom Benutzer entfernbares Zubehörteil (1), an dem Tank (20), so dass der Auslass (13) zum Abgeben von Flüssigkeit über die obere Öffnung (20a) in den Tank (20) positioniert ist.

2. Vorrichtung nach Anspruch 1, wobei die Montageanordnung (16c, 16d) dazu konfiguriert ist, die Vorrichtung (1) so an dem Tank (20) zu fixieren, dass sich die Sensoranordnung (15a, 15b) über die Öffnung (20a) ins Innere des Tanks (20) erstreckt oder benachbart zu einer Tankumfangswand (20c) außerhalb des Tanks (20) angeordnet ist, um ein Auslösesignal zu erzeugen, wenn die Flüssigkeit einen vorgegebenen Pegel (15a', 15b') im Tank (20) erreicht.

3. Vorrichtung nach Anspruch 1 oder 2, wobei die Sensoranordnung (15a, 15b) einen Niedrigpegelsensor (15a) zum Erkennen eines niedrigen Pegels (15a') an Flüssigkeit in dem Tank (20) umfasst, um ein Auslösesignal zum Umschalten der Ventilanordnung (12a, 12b) in die offene Konfiguration zu erzeugen, um den Tank (20) mit Flüssigkeit zu füllen, die durch den Auslass (13) abgegeben wird.

4. Vorrichtung nach Anspruch 3, wobei die Steuereinheit (14) dazu eingerichtet ist, die Ventilanordnung (12a, 12b) in die geschlossene Konfiguration umzuschalten:
- wenn eine vorgegebene Zeitspanne seit dem Umschalten der Ventilanordnung (12a, 12b) in die offene Konfiguration verstrichen ist, wobei die vorgegebene Zeitspanne wahlweise vom Benutzer einstellbar ist, zum Beispiel um eine Durchflussrate von Flüssigkeit einzustellen, die von dem externen Abgabesystem (3) zugeführt wird, und/oder ein maximales Speichervolumen des Tanks (20) einzustellen; und/oder
- wenn ein weiterer Pegelsensor, der einen Überfüllungspegel über dem hohen Pegel (15b') erkennt, ein Auslösesignal zum Umschalten der Ventilanordnung erzeugt, oder wenn ein vorgegebenes Volumen an Flüssigkeit, das durch einen mit der Steuereinheit (14) verbundenen Durchflussmesser (15c) gemessen wird, über den Auslass (13) abgegeben wurde, wobei das vorgegebene Volumen wahlweise vom Benutzer einstellbar ist, zum Beispiel um ein maximales Speichervolumen des Tanks (20) einzustellen.

5. Vorrichtung nach einem der vorstehenden Ansprüche, wobei die Sensoranordnung (15a, 15b) einen Hochpegelsensor (15b) zum Erkennen eines hohen Pegels (15b') an Flüssigkeit in dem Tank (20) umfasst, um ein Auslösesignal zum Umschalten der Ventilanordnung (12a, 12b) in die geschlossene Konfiguration zu erzeugen, wobei die Steuereinheit (14) wahlweise so konfiguriert ist, dass sie periodisch den Hochpegelsensor (15b) ausliest, zum Beispiel in Zeitintervallen im Bereich von 1 bis 20 oder 30 min, und die Ventilanordnung (12a, 12b) in der geschlossene Konfiguration hält, solange der hohe Pegel (15b') an Flüssigkeit erkannt wird, und die Ventilanordnung (12a, 12b) dann vorübergehend in die offene Konfiguration umzuschalten, bis der hohe Pegel (15b') an Flüssigkeit erneut erkannt wird, wobei der Hochpegelsensor (15b) kontinuierlich oder in kurzen Intervallen von der Steuereinheit (14) ausgelesen wird, wie etwa Intervallen von weniger als 5 Sekunden, zum Beispiel Intervallen im Bereich von 0,1 bis 3 Sekunden.

6. Vorrichtung nach einem der vorstehenden Ansprüche, wobei die Sensoranordnung (15a, 15b) wenigstens einen von einem optischen Sensor, einem elektrischen Sensor, zum Beispiel einem kapazitiven Sensor, und einem Schwimmsensor zum Erfassen eines Schwimmers in dem Tank (20) umfasst.

7. Vorrichtung nach einem der vorstehenden Ansprüche, wobei die Ventilanordnung (12a, 12b) wenigstens ein Ventil (12a, 12b) umfasst.

8. Vorrichtung nach Anspruch 7, wobei die Ventilanordnung (12a, 12b) zwei oder mehr Ventile (12a, 12b) umfasst, die sich in einer fluidischen Reihenkonfiguration zwischen dem Einlass (10) und dem Auslass (13) befinden, wobei wahlweise wenigstens zwei dieser Ventile (12a, 12b), die sich in fluidischer Reihenkonfiguration befinden:
- von der Steuereinheit (14) parallel gesteuert werden, so dass sie beide gleichzeitig offen sind, um die Fluidverbindung zwischen dem Einlass (10) und dem Auslass (13) herzustellen, oder beide gleichzeitig geschlossen sind, um die Fluidverbindung zu unterbrechen, oder
- von der Steuereinheit (14) separat gesteuert werden, so dass ein erstes Ventil (12a) der Ventile (12a, 12b) offen oder geschlossen ist, um die Fluidverbindung zwischen dem Einlass (10) und dem Auslass (13) herzustellen oder zu unterbrechen, wie es zum Zuführen von Flüssigkeit in den Tank (20) erforderlich ist, und so dass ein zweites Ventil (12b) der Ventile (12a, 12b) offen ist, solange das erste Ventil (12a) sich gesteuert durch die Steuereinheit (14) öffnet oder schließt, und geschlossen ist, wenn eine Störung des ersten Ventils (12a) vorliegt, wobei wahlweise ein Sensor (15c), zum Beispiel ein Durchflussmesser und/oder ein Überfüllungspegelsensor, mit der Steuereinheit (14) verbunden sein kann, um ein Füllen des Tanks (20), das im Gange ist, zu erfassen, nachdem die Steuereinheit (14) versucht hat, das erste Ventil (12a) in seine geschlossene Konfiguration umzuschalten, und die Steuereinheit (14) zum Umschalten des zweiten Ventils (12b) in seine geschlossene Konfiguration umzuschalten,
wobei die Steuereinheit (14) wahlweise dazu eingerichtet ist, eine Störung von wenigstens einem Ventil (12a, 12b) zu erkennen, um die Störung dann einem Benutzer über eine Anzeige (14b) anzuzeigen und/oder das nicht gestörte Ventil mit oder ohne automatisches Ausschalten der Vorrichtung (1) in seiner geschlossenen Konfiguration zu blockieren.

9. Vorrichtung nach einem der vorstehenden Ansprüche, die einen Körper (16) und einen überhängenden Arm (16b) umfasst, der dazu angeordnet ist, sich über die Öffnung (20a) des Speichertanks (20) und wahlweise über die Öffnung (20a) in den Speichertank (20) zu erstrecken, wobei der überhängende Arm (16) aus wenigstens einem von dem Auslass (13) und der Sensoranordnung gebildet ist oder wenigstens eins derselben hält.

10. Vorrichtung nach Anspruch 9, wobei der überhängende Arm (16b) einen Verbindungsabschnitt (16e) zum Verbinden eines Abdeckelements (16d) umfasst, das dazu konfiguriert ist, die Öffnung (20a) des Speichertanks (20) abzudecken, wobei sich wahlweise der Auslass (13) und/oder die Sensoranordnung durch den Verbindungsabschnitt (16e) erstrecken oder den Verbindungsabschnitt bilden oder einstückig mit dem Verbindungsabschnitt und dem Abdeckelement (16d) sind.

11. Vorrichtung nach einem der vorstehenden Ansprüche, die ein Abdeckelement (16d) umfasst, das dazu konfiguriert ist, die Öffnung (20a) des Speichertanks (20) zu verschließen, wobei das Abdeckelement (16d) einen Durchlass (16e), wie etwa eine Durchgangsöffnung, begrenzt, durch den sich der Auslass (13) erstreckt oder durch den der Auslass Flüssigkeit in den Speichertank (20) abgeben kann, wobei sich die Sensoranordnung (15a, 15b) wahlweise durch den Durchlass oder durch einen anderen Durchlass, der von dem Abdeckelement begrenzt wird, in den Speichertank erstreckt oder außerhalb des Speichertanks (20) eingeschlossen ist.

12. Vorrichtung nach Anspruch 10 oder 11, wobei das Abdeckelement (16d) eine Montageanordnung (16f) zum reversiblen Montieren des Abdeckelements (16d) an wenigstens einem von dem Speichertank (20), wie etwa an einem Rand, der die Tanköffnung (20a) begrenzt, und/oder einem Hauptmaschinenkörper (22) der Getränkemaschine (2) zu montieren, zum Beispiel durch Einhaken am Hauptmaschinenkörper (22).

13. Vorrichtung nach einem der vorstehenden Ansprüche, die einen Vorrichtungskörper (16) und eine Montageanordnung (16c; 16b, 16d, 16e, 16f) zum reversiblen Montieren des Vorrichtungskörpers (16) an dem Tank (20) und/oder an einem Hauptmaschinenkörper (22) der Getränkemaschine (2) umfasst, wie etwa:
- eine untere Montageanordnung (16c), wie etwa einen Fuß, zum reversiblen Montieren des Vorrichtungskörpers (16) an einem unteren Teil (20b) des Tanks (20) und/oder an einem unteren Teil des Hauptmaschinenkörpers (22), wobei die untere Montageanordnung (16c) wahlweise eine Plattform umfasst, die von einem Bodenteil des Vorrichtungskörpers (16) vorspringt und/oder sich unter dem Auslass (13) erstreckt; und/oder
- eine obere Montageanordnung (16b, 16d, 16e, 16f), wie etwa ein Oberseitenteil, zum reversiblen Montieren des Vorrichtungskörpers (16) an einem obere Teil (20a) des Tanks (20) und/oder an einem oberen Teil des Hauptmaschinenkörpers (22), wobei die obere Montageanordnung (16b, 16d, 16e, 16f) wahlweise einen Arm (16b) umfasst, der von einem oberen Teil des Vorrichtungskörpers (16) vorspringt und/oder sich über dem Auslass(13) erstreckt, wie etwa einen Arm, der ein Abdeckelement (20d) bildet oder daran fixiert ist; und/oder
- eine erste Montageanordnung (16c), wie etwa eine untere Montageanordnung, zum Beispiel einen Fuß, und eine zweite Montageanordnung (16b, 16d, 16e, 16f), zum Beispiel eine obere Montageanordnung, die reversibel an der Maschine (2) fixiert werden kann, zum Beispiel an dem Tank (20) und/oder Hauptmaschinenkörper (22), durch Befestigen der ersten und zweiten Anordnung (16b, 16c, 16d, 16e, 16f) aneinander mithilfe einer Fixierungsanordnung (16bc), die einen beliebigen Verbinder, der die Verbindungsvorrichtung (1) direkt oder indirekt an der Maschine (2), zum Beispiel einem Maschinentank (20) und/oder Maschinenhauptkörper (22), fixiert, wie etwa einen mechanischen oder physischen Verbinder beinhalten kann, zum Beispiel eins oder mehrere von Haken, Clips, Klemmen, Schrauben, Reibungsbefestigern, geometrischen Befestigern, magnetischen und Verbindern, wahlweise wenn die erste und zweite Anordnung (16b, 16c, 16d, 16e, 16f) aneinander fixiert:
- sich über zwei Extremitäten der Maschine (2), zum Beispiel über den Tank (20) und/oder den Hauptmaschinenkörper (22), erstrecken, um eine Klemme zu bilden, die an der Maschine (2), zum Beispiel an dem Tank (20) den und/oder Hauptmaschinenkörper (22), gesichert ist, wobei die zwei Extremitäten beispielsweise einen Oberseiten- und einen Bodenteil der Maschine (2), zum Beispiel des Tanks (20) und/oder des Hauptmaschinenkörpers (22), bilden; und/oder
- sich außen über und um die Maschine (2), zum Beispiel außen über und um den Tank (20) und/oder den Hauptmaschinenkörper (22), erstrecken und wahlweise durch eine Öffnung (20a) des Tanks (20) und/oder des Hauptmaschinenkörpers (22) verlaufen; und/oder
- zwischen sich eine Öffnung (16c') für das externe System (3) zur Verbindung mit dem Einlass (10) begrenzen.

14. Vorrichtung nach einem der vorstehenden Ansprüche, die ein Element (15) umfasst, das die Sensoranordnung (15a, 15b) trägt, wobei das Element (15) wahlweise eins oder mehrere der folgenden Merkmale a) bis d) aufweist:
a) das Element (15) erstreckt sich allgemein in einer Aufwärtsrichtung (15') und/oder allgemein in einer horizontalen Richtung (15"), die dazu eingerichtet ist, allgemein mit einer Wand (20c) der Maschine (2), wie etwa einer Umfangswand (20c) des Tanks (20), entlang einer entsprechenden Richtung oder entsprechenden Richtungen (20c', 20c") übereinzustimmen, wenn die Vorrichtung (1) am Tank (20) fixiert ist;
b) das Element (15) erstreckt sich allgemein in einer Aufwärtsrichtung in einer Weise, in der es sich innerhalb oder außerhalb des Tanks (20) allgemein an der Tankwand (20c) entlang erstreckt, wenn die Vorrichtung (1) am Tank (20) fixiert ist;
c) das Element (15) bildet eine Wand (15) eines Körpers (16) der Vorrichtung (1);
d) das Element (15) ist durch eine PCB gebildet, die eine Schnittstelle der Steuereinheit (14) zu wenigstens einem oder zwei Sensoren (15a, 15b) der Sensoranordnung (15a, 15b) bildet.

15. Satz, gebildet aus einer Verbindungsvorrichtung (1) nach einem der vorstehenden Ansprüche und einer Getränkemaschine (2), wobei die Vorrichtung (1) dazu eingerichtet ist, die Maschine (2) mit einem externen Flüssigkeitsabgabesystem (3), zum Beispiel einem Wasserversorgungsnetz, zu verbinden, um die Flüssigkeit der Maschine (2) zuzuführen, wobei die Maschine (2) einen Flüssigkeitsspeichertank (20) mit einer obere Öffnung (20a) zum Zuführen von Flüssigkeit in den Tank aufweist, wie etwa eine Öffnung (20a), die von einem Rand des Tanks (20) begrenzt wird, wobei der Tank (20) wahlweise durch einen Bodenteil (20b) und eine Umfangswand (20c) begrenzt wird, die sich von und über der Bodenwand (20b) zur Öffnung (20a) erstreckt, und/oder einen Tankauslass (20d) zum Abgeben von Flüssigkeit an eine Getränkeverarbeitungs- und -abgabeeinheit (24, 25) der Maschine (2) aufweist, wobei die Maschine wahlweise eins oder mehrere der folgenden aufweist:
- einen Einlass (24) zum Zuführen eines Inhaltsstoffs, wie etwa eines Inhaltsstoffs, der in einer Kartusche enthalten ist, zum Verarbeiten mit der Flüssigkeit in der Verarbeitungs- und Abgabeeinheit (24, 25), um ein Getränk zuzubereiten;
- einen Auslass (25) zum Abgeben eines Getränks aus der Verarbeitungs- und Abgabeeinheit (24, 25), wie etwa einen Auslass (25), der über einem Träger (26) zum Anordnen eines Benutzerbehälters angeordnet ist, zum Beispiel einer Tasse oder eines Bechers, um das von dem Auslass (25) abgegebene Getränk aufzufangen;
- ein Stellglied, wie etwa einen Griff (23) oder einen Motor, zum Betätigen der Getränkeverarbeitungs- und -abgabeeinheit (24, 25), um einen Inhaltsstoff, wie etwa einen Inhaltsstoff, der in einer Kartusche enthalten ist, in der Einheit (24, 25) aufzunehmen oder daraus zu entleeren;
- eine Pumpe zum Pumpen der Flüssigkeit von dem Tankauslass (20d) zu einem Getränkeabgabeauslass (25), wahlweise über eine Mischkammer zum Mischen der Flüssigkeit mit einem Inhaltsstoff, wie etwa einem Inhaltsstoff, der in einer Kartusche enthalten ist;
- einen Wärmekonditionierer, wie etwa eine Heiz- und/oder Kühleinrichtung, zur Wärmekonditionierung der Flüssigkeit aus dem Tankauslass (20d);
- eine Maschinensteuereinheit wie etwa eine Steuereinheit mit einer Benutzerschnittstelle (27);
- einen elektrischen Verbinder zum Zuführen von Leistung über einen Leistungsverbinder (14c, 14d) zu der Verbindungsvorrichtung (1); und
- einen entfernbaren Tankdeckel (20'), wie etwa einen Tankdeckel (20'), der durch ein Abdeckelement (16) ersetzbar ist, das die Verbindungsvorrichtung (1) umfasst.

## Revendications

1. Dispositif de raccordement (1) pour le raccordement d'une machine à boisson (2) à un système externe de distribution de liquide (3), par exemple, un réseau de distribution d'eau, pour alimenter un tel liquide à ladite machine (2),
une telle machine (2) ayant un réservoir de stockage de liquide (20) avec une ouverture supérieure (20a) pour alimenter un liquide dans le réservoir, telle qu'une ouverture (20a) délimitée par un rebord du réservoir (20), éventuellement ledit réservoir (20) étant délimité par une partie inférieure (20b) et une paroi périphérique (20c) s'étendant à partir de la partie inférieure (20b) et au-dessus de celle-ci en direction de l'ouverture (20a) et/ou ayant une sortie de réservoir (20d) pour distribuer le liquide à une unité de traitement et distribution de boisson (24, 25) de la machine (2),
ledit dispositif de raccordement (1) ayant :
- une entrée (10) pour un raccordement fluidique audit système externe (3) ;
- une sortie (13) pour distribuer le liquide à partir dudit système externe (3) par l'intermédiaire de l'entrée (10) jusqu'à ladite machine à boisson (2) ;
- un agencement de vanne (12a, 12b) commutable entre une configuration ouverte pour établir un raccordement fluidique entre l'entrée (10) et la sortie (13) et une configuration fermée pour interrompre le raccordement fluidique, tel qu'un agencement de vanne (12a, 12b) raccordé à l'entrée (10) par l'intermédiaire d'un connecteur de fluide (11) par exemple, un connecteur de fluide (11) fixé à une partie de châssis (16a) d'un corps (16) d'un tel dispositif (1) ; et
- une unité de commande (14) pour commuter l'agencement de vanne (12a, 12b) entre sa configuration ouverte et sa configuration fermée,
éventuellement l'unité de commande (14) étant raccordée à au moins l'une parmi : une source d'alimentation par l'intermédiaire d'un connecteur d'alimentation (14c, 14d) ; et une interface utilisateur (14a, 14b) telle qu'une interface comprenant un commutateur d'alimentation et/ou de réinitialisation (14a) et/ou un indicateur de commande, par exemple, un voyant de commande (14b),
**caractérisé en ce qu'**un tel dispositif de raccordement (1) comprend en outre :
- un agencement de capteur (15a, 15b) raccordé à l'unité de commande (14) qui est configuré pour commuter l'agencement de vanne (12a, 12b) en réponse à un signal de déclenchement provenant de l'agencement de capteur (15a, 15b) ; et
- un agencement d'assemblage (16c, 16d) pour fixer de manière réversible ledit dispositif de raccordement (1), en tant qu'accessoire amovible par l'utilisateur (1), audit réservoir (20), de sorte que la sortie (13) soit positionnée pour distribuer un liquide par l'intermédiaire de ladite ouverture supérieure (20a) dans ledit réservoir (20).

2. Dispositif selon la revendication 1, dans lequel l'agencement d'assemblage (16c, 16d) est configuré pour fixer un tel dispositif (1) audit réservoir (20) de sorte que l'agencement de capteur (15a, 15b) s'étende à l'intérieur du réservoir (20) par l'intermédiaire de ladite ouverture (20a) ou soit situé adjacent à une paroi périphérique de réservoir (20c) de façon externe au réservoir (20), de façon à générer un signal de déclenchement lorsque le liquide atteint un niveau prédéterminé (15a', 15b') dans le réservoir (20).

3. Dispositif selon la revendication 1 ou 2, dans lequel l'agencement de capteur (15a, 15b) comprend un capteur de niveau bas (15a) pour détecter un niveau bas (15a') de liquide dans ledit réservoir (20) pour générer un signal de déclenchement destiné à commuter l'agencement de vanne (12a, 12b) vers la configuration ouverte de façon à remplir ledit réservoir (20) avec du liquide distribué par la sortie (13).

4. Dispositif selon la revendication 3, dans lequel l'unité de commande (14) est agencée pour commuter l'agencement de vanne (12a, 12b) dans la configuration fermée :
- lorsqu'une période de temps prédéterminée s'est écoulée après commutation de l'agencement de vanne (12a, 12b) dans la configuration ouverte, la période de temps prédéterminée étant éventuellement ajustable par l'utilisateur, par exemple, pour l'ajuster à un débit de liquide alimenté depuis ledit système de distribution externe (3) et/ou pour l'ajuster à un volume de stockage maximal dudit réservoir (20) ; et/ou
- lorsqu'un autre capteur de niveau détectant un niveau de remplissage excessif au-dessus du niveau haut (15b') génère un signal de déclenchement destiné à commuter l'agencement de vanne ou lorsqu'un volume prédéterminé de liquide mesuré par un débitmètre (15c) raccordé à l'unité de commande (14) a été distribué par l'intermédiaire de la sortie (13), le volume prédéterminé étant éventuellement ajustable par l'utilisateur, par exemple, pour l'ajuster à un volume de stockage maximal dudit réservoir (20).

5. Dispositif selon une quelconque revendication précédente, dans lequel l'agencement de capteur (15a, 15b) comprend un capteur de niveau haut (15b) pour détecter un niveau haut (15b') de liquide dans ledit réservoir (20) pour générer un signal de déclenchement destiné à commuter l'agencement de vanne (12a, 12b) vers la configuration fermée, éventuellement l'unité de commande (14) étant configurée de façon à lire périodiquement le capteur de niveau haut (15b), par exemple, à des intervalles de temps dans la plage de 1 à 20 ou 30 min et maintenir l'agencement de vanne (12a, 12b) dans la configuration fermée tant qu'un niveau haut (15b') de liquide est détecté, puis commuter temporairement l'agencement de vanne (12a, 12b) dans la configuration ouverte jusqu'à ce que le niveau haut (15b') de liquide soit de nouveau détecté, moyennant quoi le capteur de niveau haut (15b) est lu de façon continue ou à des intervalles courts par l'unité de commande (14), tels que des intervalles de moins de 5 secondes, par exemple, des intervalles dans la plage de 0,1 à 3 secondes.

6. Dispositif selon une quelconque revendication précédente, dans lequel l'agencement de capteur (15a, 15b) comprend au moins l'un parmi un capteur optique, un capteur électrique, par exemple, un capteur capacitif et un capteur de flotteur pour détecter un flotteur dans ledit réservoir (20).

7. Dispositif selon une quelconque revendication précédente, dans lequel l'agencement de vanne (12a, 12b) comprend au moins une vanne (12a, 12b).

8. Dispositif selon la revendication 7, dans lequel l'agencement de vanne (12a, 12b) comprend deux vannes ou plus (12a, 12b) qui sont en configuration fluidique en série entre l'entrée (10) et la sortie (13), éventuellement au moins deux telles vannes (12a, 12b) qui sont en configuration fluidique en série sont commandées :
- en parallèle par l'unité de commande (14) pour être l'une et l'autre simultanément ouvertes pour établir le raccordement fluidique entre l'entrée (10) et la sortie (13) ou l'une et l'autre simultanément fermées pour interrompre le raccordement fluidique ou
- séparément par l'unité de commande (14) de sorte qu'une première vanne (12a) parmi ces vannes (12a, 12b) soit ouverte ou fermée pour établir ou interrompre le raccordement fluidique entre l'entrée (10) et la sortie (13) selon le besoin pour alimenter un liquide dans ledit réservoir (20) et de sorte qu'une deuxième vanne (12b) parmi ces vannes (12a, 12b) soit ouverte tant que la première vanne (12a) s'ouvre et se ferme telle que commandée par l'unité de commande (14) et soit fermée lorsque la première vanne (12a) fonctionne mal, éventuellement un capteur (15c), par exemple, un débitmètre et/ou un capteur de niveau de remplissage excessif, peut être raccordé à l'unité de commande (14) pour détecter le remplissage en cours dudit réservoir (20) après que l'unité de commande (14) a tenté de commuter la première vanne (12a) dans sa configuration fermée et pour déclencher l'unité de commande (14) pour commuter la deuxième vanne (12b) dans sa configuration fermée,
éventuellement l'unité de commande (14) étant agencée pour détecter un mauvais fonctionnement d'au moins une vanne (12a, 12b) pour indiquer alors à un utilisateur un tel dysfonctionnement par l'intermédiaire d'un indicateur (14b) et/ou pour bloquer la vanne qui ne fonctionne pas mal dans sa configuration fermée avec ou sans désactivation automatique d'un tel dispositif (1).

9. Dispositif selon une quelconque revendication précédente, qui comprend un corps (16) et un bras en surplomb (16b) agencé pour s'étendre par-dessus l'ouverture (20a) dudit réservoir de stockage (20) et éventuellement dans le réservoir de stockage (20) par l'intermédiaire de l'ouverture (20a), le bras en surplomb (16) étant formé de, ou contenant, au moins un parmi la sortie (13) et l'agencement de capteur.

10. Dispositif selon la revendication 9, dans lequel le bras en surplomb (16b) comprend une partie de raccordement (16e) pour le raccordement d'un élément de couverture (16d) qui est configuré pour couvrir l'ouverture (20a) dudit réservoir de stockage (20), éventuellement la sortie (13) et/ou l'agencement de capteur s'étendant à travers la partie de raccordement (16e) ou formant la partie de raccordement ou étant solidaires de la partie de raccordement et de l'élément de couverture (16d).

11. Dispositif selon une quelconque revendication précédente, qui comprend un élément de couverture (16d) qui est configuré pour fermer l'ouverture (20a) dudit réservoir de stockage (20), l'élément de couverture (16d) délimitant un passage (16e), tel qu'un trou traversant, à travers lequel la sortie (13) s'étend ou à travers lequel la sortie peut distribuer un liquide dans ledit réservoir de stockage (20), éventuellement l'agencement de capteur (15a, 15b) s'étendant à travers ledit passage ou à travers un passage différent délimité par l'élément de couverture dans ledit réservoir de stockage ou étant confiné à l'extérieur du réservoir de stockage (20).

12. Dispositif selon la revendication 10 ou 11, dans lequel l'élément de couverture (16d) comprend un agencement d'assemblage (16f) pour assembler de manière réversible l'élément de couverture (16d) à au moins un parmi ledit réservoir de stockage (20), tel qu'à un rebord délimitant l'ouverture de réservoir (20a) et/ou à un corps de machine principal (22) de ladite machine à boisson (2) par exemple, en étant accroché au corps de machine principal (22).

13. Dispositif selon une quelconque revendication précédente, qui a un corps de dispositif (16) et un agencement d'assemblage (16c ;16b, 16d, 16e, 16f) pour assembler de manière réversible le corps de dispositif (16) au réservoir (20) et/ou à un corps de machine principal (22) de ladite machine à boisson (2), tel que :
- un agencement d'assemblage inférieur (16c), tel qu'un pied, pour assembler de manière réversible le corps de dispositif (16) à une partie inférieure (20b) du réservoir (20) et/ou à une partie inférieure du corps de machine principal (22), éventuellement l'agencement d'assemblage inférieur (16c) comprenant une plate-forme faisant saillie à partir d'une partie inférieure du corps de dispositif (16) et/ou s'étendant sous la sortie (13) ; et/ou
- un agencement d'assemblage supérieur (16b, 16d, 16e, 16f), tel qu'un plateau, pour assembler de manière réversible le corps de dispositif (16) à une partie supérieure (20a) du réservoir (20) et/ou à une partie supérieure du corps de machine principal (22), éventuellement l'agencement d'assemblage supérieur (16b, 16d, 16e, 16f) comprenant un bras (16b) faisant saillie à partir d'une partie supérieure du corps de dispositif (16) et/ou s'étendant au-dessus de la sortie (13), tel qu'un bras formant, ou fixé à, un élément de couverture (20d) ; et/ou
- un premier agencement d'assemblage (16c), tel qu'un agencement d'assemblage inférieur, par exemple un pied et un deuxième agencement d'assemblage (16b, 16d, 16e, 16f), par exemple, un agencement d'assemblage supérieur, qui peut être fixé de manière réversible à ladite machine (2), par exemple, audit réservoir (20) et/ou corps de machine principal (22), en attachant les premier et deuxième agencements (16b, 16c, 16d, 16e, 16f) l'un à l'autre par un agencement de fixation (16bc) qui peut inclure n'importe quel connecteur qui fixe de manière réversible directement ou indirectement un tel dispositif de raccordement (1) à ladite machine (2), par exemple, le réservoir (20) d'une machine et/ou le corps principal (22) de la machine, tel qu'un connecteur mécanique ou physique, par exemple, un ou plusieurs parmi des crochets, des attaches, des fermetures à pression, des pinces, des vis, des éléments de fixation à frottement, des éléments de fixation géométriques, magnétiques et des connecteurs, éventuellement lorsqu'ils sont fixés conjointement, les premier et deuxième agencements (16b, 16c, 16d, 16e, 16f) :
- s'étendant par-dessus deux extrémités de ladite machine (2), par exemple, par-dessus ledit réservoir (20) et/ou corps de machine principal (22), pour former une pince fixée sur ladite machine (2), par exemple, sur ledit réservoir (20) et/ou corps de machine principal (22), lesdites deux extrémité formant, par exemple, un partie supérieure et une partie inférieure de ladite machine (2), par exemple, dudit réservoir (20) et/ou corps de machine principal (22) ; et/ou
- s'étendant de façon externe par-dessus et autour de ladite machine (2), par exemple, de façon externe par-dessus et autour dudit réservoir (20) et/ou corps de machine principal (22) et passant éventuellement à travers une ouverture (20a) dudit réservoir (20) et/ou dudit corps de machine principal (22) ; et/ou
- délimitant entre eux une ouverture (16c') pour que ledit système externe (3) soit raccordé à l'entrée (10).

14. Dispositif selon une quelconque revendication précédente, qui comprend un élément (15) portant l'agencement de capteur (15a, 15b), éventuellement l'élément (15) ayant une ou plusieurs des caractéristiques a) à d) suivantes :
a) l'élément (15) s'étend dans une direction généralement dressée (15') et/ou dans une direction généralement horizontale (15"), agencé pour correspondre généralement à une paroi (20c) de la machine (2), telle qu'une paroi périphérique (20c) du réservoir (20), le long d'une ou de plusieurs directions correspondantes (20c', 20c"), lorsqu'un tel dispositif (1) est fixé au réservoir (20) ;
b) l'élément (15) s'étend dans une direction généralement dressée d'une manière à s'étendre généralement le long de la paroi de réservoir (20c) à l'intérieur ou à l'extérieur du réservoir (20), lorsqu'un tel dispositif (1) est fixé au réservoir (20) ;
c) l'élément (15) forme une paroi (15) d'un corps (16) dudit dispositif (1) ;
d) l'élément (15) est formé par une carte à circuit imprimé qui assure l'interface d'au moins un ou deux capteur(s) (15a, 15b) de l'agencement de capteur (15a, 15b) vers l'unité de commande (14).

15. Ensemble formé d'un dispositif de raccordement (1) tel que défini dans l'une quelconque revendication précédente et d'une machine à boisson (2), le dispositif (1) étant agencé pour raccorder la machine (2) à un système externe de distribution de liquide (3), par exemple, un réseau de distribution d'eau, pour alimenter un tel liquide à ladite machine (2), la machine (2) ayant un réservoir de stockage de liquide (20) avec une ouverture supérieure (20a) pour alimenter un liquide dans le réservoir, tel qu'une ouverture (20a) délimitée par un rebord du réservoir (20), éventuellement le réservoir (20) étant délimité par une partie inférieure (20b) et une paroi périphérique (20c) s'étendant depuis, et au-dessus de, la paroi inférieure (20b) en direction de l'ouverture (20a) et/ou ayant une sortie de réservoir (20d) pour distribuer un liquide à une unité de traitement et distribution de boisson (24, 25) de la machine (2), éventuellement, la machine ayant un ou plusieurs parmi :
- une entrée (24) pour alimenter un ingrédient, tel qu'un ingrédient contenu dans une cartouche, à traiter avec ledit liquide dans l'unité de traitement et distribution (24, 25) pour préparer une boisson ;
- une sortie (25) pour distribuer une boisson depuis l'unité de traitement et distribution (24, 25) telle qu'une sortie (25) située au-dessus d'un support (26) pour la mise en place d'un récipient de l'utilisateur, par exemple, une tasse ou une grande tasse, pour recueillir la boisson distribuée par la sortie (25) ;
- un actionneur, tel qu'une poignée (23) ou un moteur, pour actionner l'unité de traitement et distribution de boisson (24, 25) pour recevoir dans et/ou évacuer de l'unité (24, 25) un ingrédient, tel qu'un ingrédient contenu dans une cartouche ;
- une pompe pour pomper ledit liquide depuis la sortie de réservoir (20d) vers une sortie de distribution de boisson (25), éventuellement par l'intermédiaire d'une chambre de mélange pour mélanger ledit liquide avec un ingrédient tel qu'un ingrédient contenu dans une cartouche ;
- un conditionneur thermique, tel qu'un dispositif de chauffage et/ou de refroidissement, pour conditionner thermiquement ledit liquide à partir de la sortie de réservoir (20d) ;
- une unité de commande de machine telle qu'une unité de commande avec une interface utilisateur (27) ;
- un connecteur électrique pour alimenter en énergie par l'intermédiaire d'un connecteur d'alimentation (14c, 14d) le dispositif de raccordement (1) ; et
- un couvercle de réservoir amovible (20'), tel qu'un couvercle de réservoir (20') remplaçable par un élément de couverture (16) constitué par le dispositif de raccordement (1).
